Europäisches Patentamt

European Patent Office

Office européen des brevets

(19)

(11) Veröffentlichungsnummer: **0 213 384**
**A1**

(12) **EUROPÄISCHE PATENTANMELDUNG**

(21) Anmeldenummer: 86110314.1

(22) Anmeldetag: 25.07.86

(51) Int. Cl.4: **F16L 27/04** , F16L 27/06 ,
F16L 47/00 , H02G 3/06

(30) Priorität: 25.07.85 DE 3526704

(43) Veröffentlichungstag der Anmeldung:
11.03.87 Patentblatt 87/11

(84) Benannte Vertragsstaaten:
AT CH IT LI

(71) Anmelder: **THYSSEN PLASTIK ANGER KG**
**Anzinger Strasse 1**
**D-8000 München 80(DE)**

(72) Erfinder: **Jirka, Karl, Dipl.-Ing.**
**Melanchthonstrasse 38**
**D-8000 München 83(DE)**
Erfinder: **Helf, Walter**
**Dr.-Kumpfmüller-Strasse 50a**
**D-8440 Straubing(DE)**
Erfinder: **Jensen, Klaus, Dipl.-Ing.**
**Waldweg 7a**
**D-8022 Grünwald(DE)**

(54) Gelenkelement für Rohre oder dergleichen.

(57) Es wird ein Gelenkelement vorgeschlagen, das vorzugsweise für den Einsatz in Kabelkanalrohrtrassen geeignet ist und aus einem Rohrstück (1) besteht, dessen Ende (1a) kalottenförmig aufgeweitet ist, in das ein Rohrstück (2) eingeschoben wird, dessen Ende (2a) dieser kalottenförmigen Aufweitung entsprechend leicht verdickt ist und innen, etwa in der Mitte der Verdickung beginnend,nach außen leicht verjüngt verläuft, sowie ein über die Verbindungsstelle geschraubten oder geschnappten Überwurfring (3). Sowohl am Übergang vom Rohrstück (1) zur kalottenförmigen Erweiterung (1a), als auch am rückwärtigen Ende des Überwurfringes (3) ist ein Anschlag (1b, 3b) vorgesehen, mit dem die Abwinkelung des Gelenkes begrenzt wird. Durch die Maßnahmen gemäß der Erfindung wird erreicht, daß praktisch keine Veränderung des inneren Querschnittes im Abwinkelungsbereich erfolgt und keine Unterschreitung des zulässigen Biegeradius der Kabelkanalrohrtrasse erfolgt, um Beschädigungen am einzuziehenden Kabel zu vermeiden.

Fig. 4

# GELENKELEMENT FÜR RÖHRE ODER DERGL.

Die Erfindung bezieht sich auf ein Gelenkelement für Rohre, vorzugsweise Kabelkanalrohre oder dergl. zur Verbindung von Rohren untereinander oder mit Schächten, Behältern, usw.

Bei Hausabflußrohren sind Gelenkelement, sog. Gelenkbögen, bekannt. Damit sollen Abwinkelungen der Rohrzüge auf einfache Weise ermöglicht werden, und zwar dann, wenn mit starren Rohrbögen bestimmte Winkel zwischen etwa 10° und 90° überhaupt nicht oder nur mit aufwendigen Sonderanfertigungen erzielt werden können.

Der mit solchen Gelenkbögen erzielte Vorteil birgt jedoch auch erhebliche Nachteile in sich. So sind diese Formstücke in ihrem Aufbau voluminös, sie benötigen somit viel Platz. Beim Einbau in Rohrleitungen, die in Mauerschlitzen verlaufen, selbst in Schächten kommt es deshalb zu Schwierigkeiten, oft ist der Einbau auch nicht durchführbar. Außerdem werden im Bereich der Gelenke die Fließgeschwindigkeiten nicht unerheblich verändert, wodurch sich Ablagerungen bilden.

Aus diesen Gründen konnten sich derartige Gelenkbögen nicht durchsetzen.

Bei Kabelkanalrohren ergeben sich in verlegetechnischer Hinsicht ähnliche Probleme. Eine bloße Übernahme der aus der Abflußrohrtechnik bekannten Gelenkbögen ist jedoch nicht möglich. Insbesondere darf wegen der Empfindlichkeit der einzuziehenden Kabel eine Querschnittsveränderung innerhalb des gesamten Kabelkanalrohres nicht vorhanden sein. Notwendig sind solche Gelenkelemente aber auch bei Kabelkanalrohren, da fast bei jedem Kabelkanalrohrzug die ankommende und/oder abgehende Kabelkanalrohrtrasse mit einem neu zu setzenden Schacht weder horizontal, noch vertikal vollständig fluchtet. Um diesen Versatz der Kabelkanalrohrtrassen auszugleichen,behilft man sich mit einer Freilegung eines entsprechend großen Teiles derselben vor, bzw. hinter dem neuen Schacht, bzw. der herzustellenden Rohrverbindung, um dann die eine gewisse Flexibilität besitzenden Kabelkanalrohre, die aus Kunststoff bestehen, soweit wie notwendig zu verbiegen. Daß dies ein Notbehelf ist, liegt auf der Hand. Ein weiterer Behelf ist der Einsatz von Bogenformstücken, beispielsweise in S-Form, was aber den Nachteil mit sich bringt, daß die auf diese Weise verlegten Radien sowohl starr sind, als auch u.U. für die danach einzuziehenden Kabel eine Verletzungsgefahr bedeuten.

Der Erfindung liegt daher die Aufgabe zugrunde, ein Gelenkelement für Rohre oder dergl., insbesondere für Ka belkanalrohre, zu besitzen, das in bestimmten Winkelbereichen um die Achse der zu verbindenden Rohrenden schwenkbar ist.

Keine nennenswerte Änderung des Querschnittes der Rohrtrasse verursacht und ein Unterschreiten des zulässigen Biegeradius der Kabelkanalrohrtrasse verhindert.

Erfindungsgemäß wird dies dadurch erreicht,daß das eine Rohrstück am Ende kalottenförmig erweitert, innen an der Wurzel der Erweiterung einen Anschlag und außen Haltemittel für einen Überschubring besitzt, das zweite Rohrstück am Ende nach außen etwas verdickt, der kalottenförmigen Erweiterung des ersten Rohrstückes entsprechend geformt ist, eine Ringnut für die Aufnahme eines Dichtmittels aufweist und innen, etwa von der Hälfte der Verdickung zum Ende leicht verjüngt verläuft, und der Überwurfring mit den Haltemitteln des ersten Rohres korrespondierende Haltemittel und einen Anschlag gegenüber dem zweiten Rohrende besitzt.

Vorteilhafterweise sind die Haltemittel als Gewinde ausgebildet.

Eine Ausführungsvariante sieht vor, daß die Haltemittel als Schnappring und -rillen ausgebildet sind.

Vorteilhafterweise bestehen die Teile des Gelenkelementes aus Kunststoff.

Die mit dem erfindungsgemäß ausgebildeten Gelenkelement erzielten Vorteile liegen insbesondere darin, daß eine Veränderung des inneren Querschnittes der Kabelkanalrohre durch den Einbau desselben praktisch nicht erfolgt, keine Unterschreitung des zulässigen Biegeradius der Kabelkanalrohrtrasse eintritt, um Beschädigungen im Kabelkanal, zu vermeiden. Durch die vorgesehen Anschläge wird die Abwinkelung im Gelenk auf ein höchstzulässiges Maß begrenzt.

Beim Einbau des Gelenkelementes in eine Kabelkanaltrasse wird zweckmäßigerweise so vorgegangen, daß ein Formstück vor der Kabelkanaleinführungsplatte und ein weiteres am Ende der bestehenden Kabelkanalrohrtrasse vorgesehen wird. Der Abstand beider Gelenkelemente wird durch normale Kabelschutzrohre oder bei belegten Kabelkanalzügen durch Kabelkanalhalbrohre überbrückt. Somit ist allen Verlegungsmöglichkeiten Rechnung getragen, die sich zwischen einem Versatz der Muffen der Kabelkanaleinführungsplatten und den entsprechenden Kabelkanalzügen,bestehend aus Kabelkanalformstücken, bzw. Kabelkanalrohren, ergibt.

Die Erfindung ist nachstehend anhand eines in den Abbildungen dargestellten Ausführungsbeispieles näher erläutert.

Es zeigt:

Figur 1 Einzelteile des Gelenkelementes im Schnitt,

Figur 2 das zusammengesetzte Gelenkelement,

Figur 3 das abgewinkelte Gelenkelement, und

Figur 4 die vergrößerte Darstellung des Gelenkelementes anhand einer Ausführungsvariante.

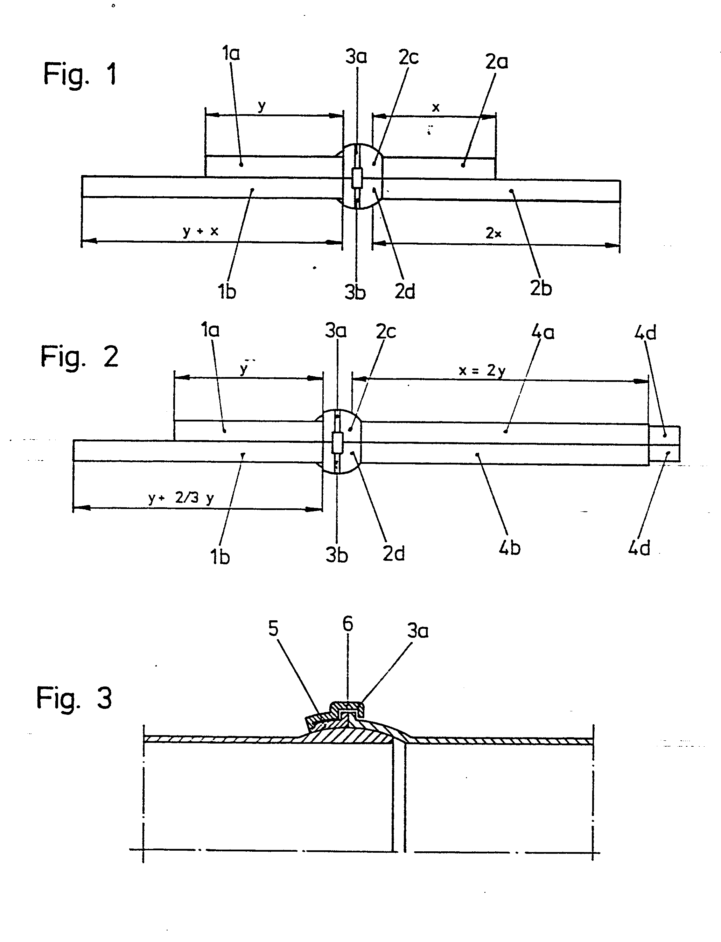

Wie in Figur 1 dargestellt, besteht das Gelenkelement gemäß der Erfindung aus einem ersten Rohrstück 1, dessen Ende 1a kalottenförmig erweitert ist und am Übergang vom Rohrstück 1 zur Erweiterung 1a einen absatzartigen Anschlag 1b besitzt, sowie außen an der kalottenförmigen Erweiterung 1a mit Haltemitteln, beispielsweise einem Gewinde 1c versehen ist. Weiterhin besteht das Gelenkelement aus dem zweiten Rohrstück 2, das am Ende mit einer, der kalottenförmigen Erweiterung 1a entsprechend geformten, Verdickung 2a versehen ist, mit der es in die Erweiterung 1a eingeschoben wird. Außerdem ist in der Verdickung 2a eine Ringnut 2b vorgesehen. Das äußerste Ende der Verdickung 2a ist innen mit einer Verjüngung 2c versehen, die zum Ende des Rohrstückes 2 verläuft. Ein Überwurfring 3 wird mit seinem Haltemittel 3a, ebenfalls einem Gewinde, nach Einschieben des Rohrendes 2a in die kalottenartige Erweiterung 1a, über die Verbindungsstelle geschoben und mit dem Gewinde 1c am Rohrende 1a des Rohres 1 verschraubt. Am rückwärtigen Ende ist der Haltering 3 mit einem Anschlag 3b versehen.

Der zusammengesetzte Zustand des Gelenkelementes ist in Figur 2 dargestellt. In die Ringnut 2b des Rohrstückes 2 ist ein Dichtring 4 eingesetzt, wenn die Kabelkanalrohrtrasse abgedichtet sein soll.

In Figur 3 ist gezeigt, wie das Gelenkelement im abgewinkelten Zustand sich darstellt. Die abgewinkelte Stellung wird durch die, in der Endstellung wirksamen, An schläge 1b und 3b begrenzt, die verhindern, daß das Rohrstück 2 gegenüber dem Rohrstück 1 zu weit abgewinkelt wird, d.h. bestimmte vorgebene maximale Winkel überschritten werden. Dabei wird gleichzeitig verhindert, daß das Ende des Rohrstückes 2 in den inneren Querschnitt der Verbindungsstelle hineinragt, wodurch Verletzungen an den einzuziehenden Kabeln vermieden werden. Durch die Verjüngung 2c wird erreicht, daß auch im abgewinkelten Zustand der Übergang vom Rohrstück 1 zum Rohrstück 2 fluchtet.

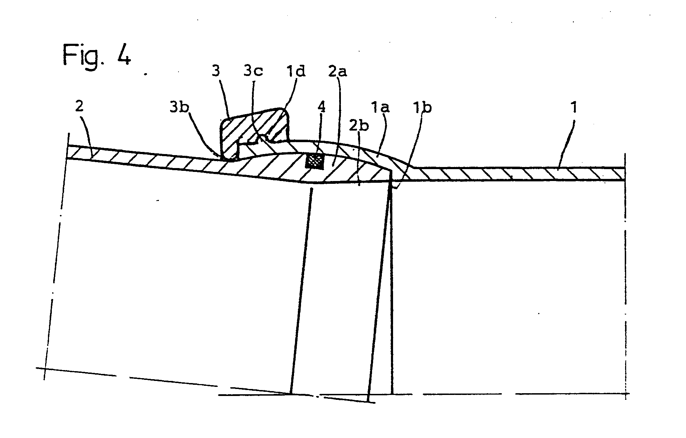

Die Figur 4 zeigt das Gelenkelement im abgewinkelten Zustand in vergrößerter Darstellung anhand einer Ausführungsvariante. Anstelle des Gewindes 1c, bzw. 3a gemäß Figur 1 bis 3 ist hier ein Schnappring 1d als Haltemittel vorgesehen, der mit einer entsprechenden Schnappnut 3c im Überwurfring 3 ein Lösen der Verbindung verhindert.

Das mit der Erfindung vorgeschlagene Gelenkelement ist selbstverständlich nicht auf die Verwendung in Kabelkanaltrassen beschränkt, sondern ist mit Vorteil überall dort einzusetzen, wo Hohlprofile gewinkelt weiterzuführen sind. Vorteilhafterweise ist das Gelenkelement aus Kunststoff gefertigt, jedoch ist Kunststoff nicht Bedingung für die Herstellung desselben. Das Gelenkelement kann auch aus anderen Werkstoffen bestehen, wodurch es den jeweiligen Gegebenheiten, insbesondere auch dem Werkstoff des übrigen Rohrabschnittes, in den es eingesetzt ist, angepaßt wird.

## Ansprüche

1. Gelenkelement für Rohre oder dergl., vorzugsweise für Kabelkanalrohre, zur Verbindung von Rohren untereinander oder mit Schächten, Behältern, usw., dadurch gekennzeichnet , daß das eine Rohrstück (1) am Ende kalottenförmig erweitert (1) ist, innen an der Wurzel der Erweiterung - (1a) einen Anschlag (1b) und außen Haltemittel - (1c) für einen Überwurfring (3) besitzt, das zweite Rohrstück am Ende (2) nach außen mit einer Verdickung (2), die der kalottenförmigen Erweiterung - (1a) des ersten Rohrendes (1) entsprechend geformt ist, versehen ist, eine Ringnut (2b) für die Aufnahme eines Dichtmittels (4) aufweist und innen etwa von der Hälfte der Verdickung (2a) zum Ende zu leicht verjüngt (2c) verläuft und der Überwurfring (3) mit den Haltemitteln (1c) des ersten Rohres korrespondierende Haltemittel (3a) und einen Anschlag (3b) gegenüber dem zweiten Rohrende (2) besitzt.

2. Gelenkelement für Rohre oder dergl. nach Anspruch 1, dadurch gekennzeichnet, daß die Haltemittel (1c, 3a) als Gewinde ausgebildet sind.

3. Gelenkelement für Rohre oder dergl. nach Anspruch 1 und 2, dadurch gekennzeichnet, daß die Haltemittel (1d, 3c) als Schnappring (1d) und -rillen (3c) ausgebildet sind.

4. Gelenkelement für Rohre oder dergl. nach Anspruch 1 und einem der folgenden, dadurch gekennzeichnet , daß die Teile des Gelenkelementes aus Kunststoff bestehen.

**Fig. 1**

**Fig. 2**

**Fig. 3**

Fig. 4

## EINSCHLÄGIGE DOKUMENTE

EP 86110314.1

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | DE - A - 2 006 845 (DIPL.-ING. K. WEINHOLD KG.) <br> * Gesamt * <br> -- | 1,2 | F 16 L 27/04 <br> F 16 L 27/06 <br> F 16 L 47/00 <br> H 02 G 3/06 |
| Y | DE - B - 1 034 432 (H. KREIDEL) <br> * Gesamt * <br> -- | 1,2 | |
| Y | DE - C - 847 538 (FA. J. EBERS-PÄCHER) <br> * Gesamt * <br> -- | 1,2 | |
| Y | DE - A1 - 2 448 426 (KANEGA FUCHI KAGAKU KOGYO K.K.) <br> * Gesamt * <br> -- | 1,4 | |

**RECHERCHIERTE SACHGEBIETE (Int. Cl.4)**

| Kategorie | | Betrifft Anspruch | |
|---|---|---|---|
| Y | US - A - 4 088 348 (SHEMTOV) <br> * Gesamt * <br> -- | 1,4 | F 16 L 27/00 <br> F 16 L 47/00 <br> H 02 G 3/00 |
| A | US - A - 2 098 188 (R.F. KINMONT) <br> * Gesamt * <br> ---- | 1 | |

Der vorliegende Recherchenbericht wurde für alle Patentansprüche erstellt.

| Recherchenort | Abschlußdatum der Recherche | Prüfer |
|---|---|---|
| WIEN | 23-09-1986 | SCHUGANICH |